(19) Europäisches Patentamt / European Patent Office / Office européen des brevets

(11) **EP 4 547 505 B1**

(12) **FASCICULE DE BREVET EUROPEEN**

(45) Date de publication et mention de la délivrance du brevet:
**01.07.2026 Bulletin 2026/27**

(21) Numéro de dépôt: **23733354.7**

(22) Date de dépôt: **20.06.2023**

(51) Classification Internationale des Brevets (IPC):
**B60H 1/00** *(2006.01)* **B60H 1/32** *(2006.01)*

(52) Classification Coopérative des Brevets (CPC):
**B60H 1/00914; B60H 1/00278; B60H 1/3219;**
B60H 2001/00307; B60H 2001/3272;
B60H 2001/3285

(86) Numéro de dépôt international:
**PCT/EP2023/066555**

(87) Numéro de publication internationale:
**WO 2024/002775 (04.01.2024 Gazette 2024/01)**

(54) **PROCÉDÉ DE CONTRÔLE D'UN SYSTÈME DE CONDITIONNEMENT THERMIQUE**

VERFAHREN ZUR STEUERUNG EINER THERMISCHEN KLIMAANLAGE

METHOD FOR CONTROLLING A THERMAL CONDITIONING SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.06.2022 FR 2206498**

(43) Date de publication de la demande:
**07.05.2025 Bulletin 2025/19**

(73) Titulaire: **Valeo Electrification**
**95892 Cergy Pontoise (FR)**

(72) Inventeurs:
• **NICOLAS, Bertrand**
**78320 Le Mesnil-Saint-Denis (FR)**
• **YAHIA, Mohamed**
**78320 Le Mesnil-Saint-Denis (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**FR-A1- 3 115 733 JP-A- 2013 104 652**
**US-A- 6 058 728**

## Description

### Domaine technique

La présente invention se rapporte au domaine des systèmes de conditionnement thermique. De tels systèmes de conditionnement thermique peuvent notamment équiper un véhicule automobile. Ces systèmes permettent de réaliser une régulation thermique de différents organes du véhicule, comme l'habitacle ou une batterie de stockage d'énergie électrique, lorsque la chaine de traction du véhicule est électrique. Les échanges de chaleur sont gérés principalement par la compression et la détente d'un fluide réfrigérant au sein de plusieurs échangeurs de chaleur.

### Technique antérieure

Les systèmes de conditionnement thermiques font couramment appel à un circuit de fluide réfrigérant et un circuit de liquide caloporteur échangeant de la chaleur avec le fluide réfrigérant. De tels systèmes sont ainsi appelés indirects. Un compresseur assure le passage à haute pression du fluide réfrigérant.

Il est connu, comme par exemple du document JP 2013 104652 A, de disposer dans le circuit de fluide réfrigérant un premier échangeur de chaleur permettant d'assurer le chauffage d'un flux d'air à destination de l'habitacle du véhicule, et un deuxième échangeur de chaleur permettant de refroidir un élément de la chaine de traction du véhicule, tel une batterie de stockage d'énergie électrique. Selon un mode de fonctionnement, l'énergie dissipée par l'élément de la chaine de traction est récupérée afin d'être transférée au flux d'air alimentant l'habitacle, afin de chauffer celui-ci. Ce mode de fonctionnement permet d'assurer le chauffage de l'habitacle avec une bonne efficacité énergétique.

Dans certaines conditions de fonctionnement, dans lesquelles la puissance thermique à fournir est faible par rapport à la puissance maximale pouvant être fournie, il peut être difficile de ne pas fournir une puissance de chauffage excessive par rapport au besoin. En effet, l'énergie récupérée de l'élément de la chaine de traction, combinée à l'énergie reçue par le fluide réfrigérant lors de sa compression, peut dépasser le besoin en chauffage. Dans ces conditions, il est fréquent d'avoir à désactiver la circulation de fluide réfrigérant à intervalles réguliers pour obtenir une puissance moyenne suffisamment faible. Ce type de fonctionnement alternant des phases d'arrêt et des phases de fonctionnement normale ne sont pas souhaitables, car elles affectent le confort thermique et sollicitent davantage les composants du système de conditionnement thermique, notamment le compresseur.

Il existe ainsi un besoin de disposer d'un procédé de contrôle d'un système de conditionnement thermique permettant d'assurer à la demande de faibles puissances de chauffage de façon stable.

## Résumé

A cette fin, la présente invention , telle que définie dans la revendication 1, propose un procédé de contrôle d'un système de conditionnement thermique notamment pour véhicule automobile, le système de conditionnement thermique comprenant:

- un circuit de liquide caloporteur configuré pour faire circuler un liquide caloporteur,
- un circuit de fluide réfrigérant comportant :

  -- une boucle principale comprenant successivement selon un sens d'écoulement du fluide réfrigérant:

  --- un compresseur,
  --- un premier échangeur de chaleur configuré pour fournir une puissance thermique à un fluide caloporteur,
  --- un premier détendeur,
  --- un deuxième échangeur de chaleur agencé conjointement sur le circuit de fluide réfrigérant et sur le circuit de liquide caloporteur de façon à permettre un échange de chaleur entre le fluide réfrigérant et le liquide caloporteur,

  -- une première branche de dérivation permettant au fluide réfrigérant en sortie du compresseur de rejoindre le deuxième échangeur en contournant le premier échangeur et le premier détendeur, la première branche de dérivation comprenant un deuxième détendeur,

le procédé de contrôle comportant les étapes :

(i) Recevoir une consigne de puissance thermique à fournir au moins au fluide caloporteur,

(ii) Si la consigne de puissance thermique est inférieure à un seuil minimal prédéterminé :

(iii) Maintenir le régime de rotation du compresseur dans une plage de régime prédéterminée,

(iv) Déterminer une température de consigne du fluide caloporteur en sortie du premier échangeur à partir de la consigne de puissance thermique reçue,

(v) Déterminer une température réelle du fluide caloporteur en sortie du premier échangeur,

(vi) Contrôler une section de passage du deuxième détendeur pour qu'une différence entre la température de consigne déterminée du fluide caloporteur et la température réelle déterminée du fluide caloporteur soit inférieure à un premier seuil prédéterminé, et

(vii) Contrôler une section de passage du premier détendeur pour que le fluide réfrigérant en entrée du compresseur soit à l'état de vapeur surchauffée.

La première branche de dérivation permet d'envoyer un débit de fluide réfrigérant gazeux vers l'entrée du deuxième échangeur de chaleur. En ajustant le débit respectif de fluide réfrigérant dans la boucle principale et dans la première branche de dérivation, il est ainsi possible d'inhiber la récupération d'énergie au niveau du deuxième échangeur, ou au moins de rendre cette récupération d'énergie négligeable. La puissance thermique fournie au fluide caloporteur est ainsi sensiblement égale à la puissance nécessaire à l'entrainement du compresseur. Il est ainsi possible d'assurer une faible valeur de puissance de chauffage de manière contrôlée et stable.

Les caractéristiques listées dans les paragraphes suivant peuvent être mises en œuvre indépendamment les unes des autres ou selon toutes les combinaisons techniquement possibles :
Le système de conditionnement thermique est un système de conditionnement thermique pour véhicule automobile.

Le seuil minimal prédéterminé de puissance thermique à fournir est par exemple 120 W.

La plage de régime prédéterminée dans laquelle le régime de rotation du compresseur est maintenu correspond à une plage de régime proche du régime minimal de fonctionnement du compresseur.

La plage de régime prédéterminée dans laquelle le régime de rotation du compresseur est maintenue est par exemple la plage de régime comprise entre 580 tr/min et 800 tr/min.

Le contrôle de la section de passage du premier détendeur est par exemple réalisé par un régulateur proportionnel, intégral.

De même, le contrôle de la section de passage du deuxième détendeur peut être réalisé par un régulateur proportionnel, intégral.

Ce type de régulateur assure une régulation robuste tout en restant simple à programmer et à mettre au point.

Selon un mode de mise en œuvre du procédé, à l'étape (iii), le régime de rotation du compresseur est régulé à une valeur constante prédéterminée.

Le fonctionnement du système thermique est ainsi plus stable, ce qui améliore la précision du contrôle.

La valeur de régulation du régime de rotation du compresseur est de préférence égale à au régime minimal de fonctionnement stable du compresseur.

La valeur de régulation du régime de rotation du compresseur est par exemple égale à 600 tr/min.

Selon un mode de réalisation du procédé, à l'étape (iv), la consigne de température du fluide caloporteur est déterminée à partir de la consigne de puissance thermique reçue, à partir d'une consigne de débit de fluide caloporteur et à partir d'une température du fluide caloporteur en entrée du premier échangeur

Cette modélisation permet d'obtenir un contrôle précis tout est étant simple à mettre en œuvre et peu couteuse en ressources de calculs.

Selon un exemple de mise en œuvre du procédé, l'étape (vi) comprend la sous-étape :
(vi-1) Si la différence entre la consigne de température déterminée du fluide caloporteur et la température réelle déterminée du fluide caloporteur est supérieure à 0, réduire la section de passage du deuxième détendeur.

De même, l'étape (vi) peut comprendre la sous-étape :
(vi-2) Si l'écart calculé est inférieur à 0, augmenter la section de passage du deuxième détendeur.

Selon un mode de réalisation du procédé, dans lequel le compresseur est configuré pour faire passer le fluide réfrigérant d'une pression d'aspiration à une pression de refoulement, le procédé comporte les étapes :

(v-1) Déterminer une consigne de pression d'aspiration à partir de la consigne de température du fluide caloporteur, à partir de la consigne de débit de fluide caloporteur à partir d'une température du fluide caloporteur en entrée du premier échangeur, et à partir du régime de rotation du compresseur régulé à une valeur constante prédéterminée,
(v-2) Contrôler une section de passage du deuxième détendeur pour qu'une différence entre la pression d'aspiration et la consigne de pression d'aspiration soit inférieure à un deuxième seuil prédéterminé.

Le contrôle de la température du fluide caloporteur en sortie du premier échangeur, c'est-à-dire après échange thermique avec le fluide réfrigérant au sein du premier échangeur, peut également être réalisé en se basant sur la pression de refoulement comme paramètre de contrôle. En effet, la température du fluide caloporteur en sortie du premier échangeur est directement liée à la température de condensation du fluide réfrigérant, et donc à la pression de condensation du fluide réfrigérant. Cette pression de condensation est, en négligeant les pertes de charges, égale à la pression de refoulement du compresseur. Le contrôle peut ainsi être réalisé sans mesure directe de la température du fluide caloporteur, ce qui permet d'économiser un capteur ainsi que la chaine de mesure associée.

Dans un mode de réalisation du procédé, dans lequel la boucle principale du circuit de fluide réfrigérant comprend un troisième détendeur agencé en aval du compresseur et en amont du premier échangeur de chaleur, le procédé comprend l'étape :
(viii) Contrôler une section de passage du fluide réfrigérant dans le troisième détendeur de façon à ce qu'une perte de charge générée par le troisième détendeur soit inférieure à un troisième seuil prédéterminé.

Le troisième seuil prédéterminé peut être un seuil absolu. Le troisième seuil prédéterminé est par exemple égal à 0,5 Bar.

Le troisième seuil prédéterminé peut être un seuil relatif. Le troisième seuil prédéterminé est par exemple égal à 5% de la pression maximale de refoulement du compresseur.

La section de passage du fluide réfrigérant dans le troisième détendeur peut être contrôlée de façon à ce que le troisième détendeur soit en position d'ouverture maximale.

Ainsi, la perte de charge générée par le troisième détendeur est minimale.

Selon un mode de réalisation, le procédé comprend les étapes :

(vii1) Déterminer une surchauffe du fluide réfrigérant en entrée du compresseur,

(vii2) Contrôler une section de passage du premier détendeur de façon à ce que la surchauffe du fluide réfrigérant en entrée du compresseur soit égale à une valeur de consigne.

La consigne de surchauffe en entrée du compresseur est choisie de façon à garantir que le réfrigérant aspiré par le compresseur soit sous forme entièrement gazeuse. La fiabilité du compresseur est ainsi garantie.

La valeur de consigne de la surchauffe du fluide réfrigérant en entrée du compresseur est comprise entre 5°C et 15°C.

Selon un mode de réalisation alternatif, le procédé peut comprendre les étapes :

(vii1') Déterminer une surchauffe du fluide réfrigérant en sortie du compresseur,

(vii2') Contrôler une section de passage du deuxième détendeur de façon à ce que la surchauffe du fluide réfrigérant en sortie du compresseur soit égale à une valeur de consigne.

Contrôler la consigne de surchauffe en sortie du compresseur est une autre manière de garantir que le réfrigérant aspiré par le compresseur soit sous forme entièrement gazeuse. La fiabilité du compresseur est ainsi garantie.

La valeur de consigne de la surchauffe du fluide réfrigérant en sortie du compresseur est comprise entre 15°C et 35°C.

Selon un mode de réalisation du procédé, dans lequel la boucle principale du système de conditionnement thermique comprend, en aval du premier échangeur de chaleur et en amont du premier dispositif de détente, un troisième échangeur de chaleur agencé conjointement sur le circuit de fluide réfrigérant et sur le circuit de liquide caloporteur de façon à permettre un échange de chaleur entre le fluide réfrigérant et le liquide caloporteur, le troisième échangeur de chaleur étant configuré pour fournir une puissance thermique au liquide caloporteur, et dans lequel à l'étape (i), la consigne de puissance thermique à fournir est une puissance thermique totale, somme de la puissance thermique à fournir au fluide caloporteur au niveau du premier échangeur et de la puissance thermique à fournir au liquide caloporteur au niveau du troisième échangeur.

Selon un exemple de mise en œuvre du procédé, le fluide caloporteur est un flux d'air intérieur à un habitacle d'un véhicule automobile.

Selon un autre exemple de mise en œuvre du procédé, le fluide caloporteur est un liquide caloporteur configuré pour circuler dans un cinquième échangeur de chaleur configuré pour échanger de la chaleur avec un flux d'air intérieur à l'habitacle du véhicule.

Selon un mode de réalisation du procédé, le deuxième échangeur de chaleur est couplé thermiquement avec un élément d'une chaine de traction du véhicule, par l'intermédiaire du liquide caloporteur du circuit de liquide caloporteur.

Le deuxième échangeur de chaleur permet ainsi d'absorber de la chaleur de l'élément de la chaine de traction du véhicule, afin de maintenir sa température dans une limite acceptable ou afin de transférer la chaleur absorbée à un autre organe.

Selon un mode de réalisation du procédé, le troisième échangeur de chaleur est couplé thermiquement à l'élément d'une chaine de traction du véhicule, par l'intermédiaire du liquide caloporteur du circuit de liquide caloporteur.

Le troisième échangeur de chaleur permet ainsi de fournir une puissance thermique à l'élément de la chaine de traction du véhicule, c'est-à-dire de chauffer cet élément afin d'augmenter sa température.

L'élément de la chaine de traction électrique comprend par exemple un moteur électrique de traction du véhicule.

En variante ou de manière complémentaire, l'élément de la chaine de traction électrique comprend un module électronique de pilotage d'un moteur électrique de traction du véhicule.

En variante encore, ou de manière complémentaire, l'élément de la chaine de traction électrique comprend une batterie de stockage d'énergie électrique.

L'invention : , telle que définie dans la revendication 11, se rapporte aussi à un système de conditionnement thermique notamment pour véhicule automobile comprenant:

- un circuit de liquide caloporteur configuré pour faire circuler un liquide caloporteur,
- un circuit de fluide réfrigérant comportant :

-- une boucle principale comprenant successivement selon un sens d'écoulement du fluide réfrigérant:

--- un compresseur,
--- un premier échangeur de chaleur configuré pour fournir une puissance thermique à un fluide caloporteur,
--- un premier détendeur,
--- un deuxième échangeur de chaleur agencé conjointement sur le circuit de fluide réfrigérant et sur le circuit de liquide caloporteur de façon à permettre un échange de chaleur entre le fluide réfrigérant et le liquide caloporteur,

-- une première branche de dérivation permettant au fluide réfrigérant en sortie du compresseur de rejoindre le deuxième échangeur en contournant le premier échangeur et le premier détendeur, la première branche de dérivation comprenant un deuxième détendeur,

- Une unité électronique de contrôle configurée pour mettre en œuvre le procédé de contrôle décrit précédemment.

Selon un aspect du système de conditionnement thermique, la boucle principale de fluide réfrigérant comprend un dispositif d'accumulation de fluide réfrigérant disposé en aval du premier échangeur et en amont du premier détendeur.

Selon un mode de réalisation du système de conditionnement thermique, le circuit de fluide réfrigérant comprend une deuxième branche de dérivation disposée en parallèle du premier détendeur et du troisième échangeur de chaleur, la deuxième branche de dérivation comprenant un quatrième détendeur et un quatrième échangeur de chaleur.

Par exemple, le quatrième échangeur de chaleur est configuré pour échanger de la chaleur avec un flux d'air intérieur à l'habitacle du véhicule.

Dans un mode de réalisation, la boucle principale de fluide réfrigérant comprend un dispositif d'accumulation de fluide réfrigérant disposé en aval du troisième échangeur et en amont du premier détendeur.

Selon un mode de réalisation du système de conditionnement thermique, la boucle principale de fluide réfrigérant comprend un échangeur interne configuré pour permettre un échange de chaleur entre le fluide réfrigérant à haute pression en aval du deuxième échangeur de chaleur et en amont du premier détendeur, et le fluide réfrigérant à basse pression en aval du troisième échangeur et en amont du compresseur.

Selon un aspect du système de conditionnement thermique, celui-ci comprend une première branche de dérivation reliant fluidiquement un premier point de raccordement disposé sur la boucle principale A en aval du compresseur et en amont du premier échangeur à un deuxième point de raccordement disposé sur la boucle principale en aval du premier détendeur et en amont du deuxième échangeur, la première branche de dérivation comportant un deuxième dispositif de détente.

Selon un mode de réalisation, le système de conditionnement thermique comprend une deuxième branche de dérivation reliant fluidiquement un troisième point de raccordement disposé sur la boucle principale en aval du deuxième échangeur et en amont du premier détendeur à un quatrième point de raccordement disposé sur la boucle principale en aval du troisième échangeur et en amont du compresseur, la deuxième branche de dérivation comportant un quatrième dispositif de détente disposé en amont d'un quatrième échangeur de chaleur.

## Brève description des dessins

D'autres caractéristiques, détails et avantages apparaîtront à la lecture de la description détaillée ci-après, et à l'analyse des dessins annexés, sur lesquels :

[Fig. 1] est une vue schématique d'un système de conditionnement thermique selon un premier mode de réalisation, dans lequel le procédé de contrôle selon l'invention est mis en œuvre,

[Fig. 2] est une vue schématique d'un système de conditionnement thermique selon un deuxième mode de réalisation, dans lequel le procédé de contrôle selon l'invention est mis en œuvre,

[Fig. 3] est une vue schématique d'une variante du système de conditionnement thermique de la figure 2,

[Fig. 4] est une vue schématique d'une autre variante du système de conditionnement thermique de la figure 2,

[Fig. 5] est un diagramme thermodynamique schématisant l'état du fluide réfrigérant lorsque de la mise en œuvre du procédé de contrôle,

[Fig. 6] est une courbe illustrant le fonctionnement du procédé de contrôle,

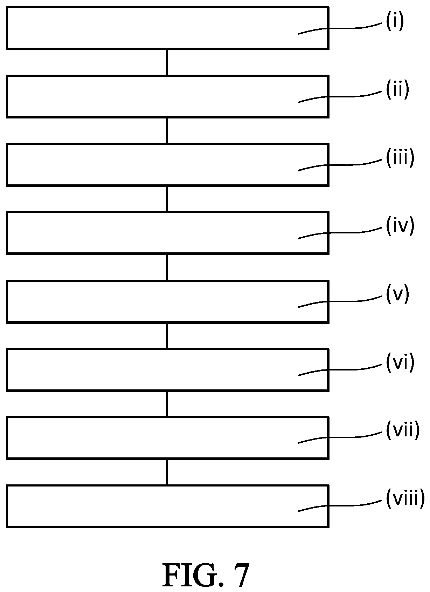

[Fig. 7] est un schéma-bloc illustrant différentes étapes du procédé selon l'invention.

## Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations.

Dans la description qui suit, le terme " un premier élément en amont d'un deuxième élément " signifie que le premier élément est placé avant le deuxième élément par rapport au sens de circulation, ou de parcours, d'un fluide. De manière analogue, le terme " un premier élément en aval d'un deuxième élément " signifie que le premier élément est placé après le deuxième élément par rapport au sens de circulation, ou de parcours, du fluide considéré. Dans le cas du circuit de fluide réfrigérant, le terme « un premier élément est en amont d'un deuxième élément » signifie que le fluide réfrigérant parcourt successivement le premier élément, puis le deuxième élément, sans passer par le dispositif de compression. Autrement dit, le fluide réfrigérant sort du dispositif de compression, traverse éventuellement ou plusieurs éléments, puis traverse le premier élément, puis le deuxième élément, puis regagne le dispositif de compression, éventuellement après avoir traversé d'autres éléments.

Le terme « un deuxième élément est placé entre un premier élément et un troisième élément » signifie que le plus court trajet pour passer du premier élément au troisième élément passe par le deuxième élément. Quand il est précisé qu'un sous-système comporte un élément donné, cela n'exclut pas la présence d'autres éléments dans ce sous-système.

Dans le système de conditionnement thermique 100 décrit, une unité électronique de contrôle 50 reçoit des informations de différents capteurs, non représentés, mesurant notamment les caractéristiques physiques du fluide réfrigérant en divers points du circuit. L'unité électronique de contrôle reçoit également des consignes émises par les occupants du véhicule, comme par exemple la température souhaitée à l'intérieur de l'habitacle. L'unité électronique de contrôle met en œuvre des lois de contrôle permettant le pilotage des différents actionneurs, afin d'assurer le contrôle du système de conditionnement thermique 100 de façon à assurer les consignes reçues. L'unité électronique de contrôle 50 met notamment en œuvre le procédé selon l'invention.

Le dispositif de compression 7 peut être un compresseur électrique, c'est-à-dire un compresseur dont les pièces mobiles sont entrainées par un moteur électrique 6. Le régime de rotation du moteur électrique 6 du compresseur électrique 7 est contrôlable de façon à pouvoir ajuster le débit de réfrigérant mis sous pression. Le dispositif de compression 7 comporte un côté aspiration du fluide réfrigérant à basse pression, encore appelé entrée 7a du dispositif de compression, et un côté refoulement du fluide réfrigérant à haute pression, encore appelé sortie 7b du dispositif de compression 7. Les pièces mobiles internes du compresseur 7 font passer le fluide réfrigérant d'une basse pression, ou pression d'aspiration $Pr\_s$, côté entrée 7a, à une haute pression, ou pression de refoulement $Pr\_d$, côté sortie 7b. Après détente dans un ou plusieurs dispositifs de détente, le fluide réfrigérant revient à l'entrée 7a du compresseur 7 et recommence un nouveau cycle thermodynamique.

Le compresseur 7 peut par exemple être un compresseur à spirale, ou un compresseur à palettes, ou encore un compresseur à vis.

Le circuit de fluide réfrigérant 10 forme un circuit fermé dans lequel peut circuler le fluide réfrigérant. Le circuit de fluide réfrigérant 10 est étanche lorsque celui çi est dans un état nominal de fonctionnement, c'est-à-dire sans défaut ou fuite. Chaque point de raccordement du circuit 10 permet au fluide réfrigérant de passer dans l'une ou l'autre des portions de circuit se rejoignant à ce point de raccordement. La répartition du fluide réfrigérant entre les portions de circuit se rejoignant en un point de raccordement se fait en jouant sur l'ouverture ou la fermeture de vannes d'arrêt, clapets anti-retour ou dispositif de détente compris sur chacune des branches. Autrement dit, chaque point de raccordement est un moyen de redirection du fluide réfrigérant arrivant à ce point de raccordement. Des vannes d'arrêt et les clapets antiretour permettent ainsi de diriger sélectivement le fluide réfrigérant dans les différentes branches du circuit de réfrigérant, afin d'assurer différents modes de fonctionnement, comme il sera décrit ultérieurement.

Le fluide réfrigérant utilisé par le circuit de fluide réfrigérant 1 est ici un fluide chimique tel que le R1234yf. D'autres fluides réfrigérants peuvent aussi être employés, comme par exemple le R134a, le R290 ou le R744.

On entend par flux d'air intérieur Fi un flux d'air à destination de l'habitacle du véhicule automobile. Ce flux d'air intérieur peut circuler dans une installation de chauffage, ventilation et/ou climatisation, souvent désignée par le terme Anglais « HVAC » signifiant « Heating, Ventilating and Air Conditioning ». Cette installation n'a pas été représentée sur les différentes figures. Un groupe moto-ventilateur, non représenté, peut être activé afin d'augmenter si nécessaire le débit du flux d'air intérieur Fi.

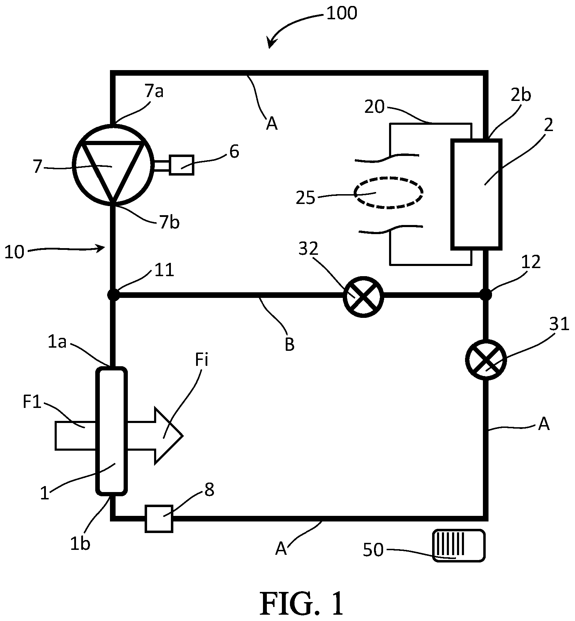

On a représenté sur la figure 1 un système de conditionnement thermique 100 comprenant:

- un circuit 20 de liquide caloporteur configuré pour faire circuler un liquide caloporteur,
- un circuit de fluide réfrigérant 10 comportant :

-- une boucle principale A comprenant successivement selon un sens d'écoulement du fluide réfrigérant:

--- un compresseur 7,
--- un premier échangeur 1 de chaleur configuré pour fournir une puissance thermique Pw1 à un fluide caloporteur F1,
--- un premier détendeur 31,
--- un deuxième échangeur 2 de chaleur agencé conjointement sur le circuit de fluide réfrigérant 10 et sur le circuit de liquide caloporteur 20 de façon à permettre un échange de chaleur entre le fluide réfrigérant et le liquide caloporteur,

-- une première branche de dérivation B permettant au fluide réfrigérant en sortie du compresseur 7 de rejoindre le deuxième échangeur 2 en contournant le premier échangeur 1 et le premier détendeur 31, la première branche de dérivation B comprenant un deuxième détendeur 32,

- Une unité électronique de contrôle 50 configurée pour mettre en œuvre le procédé de contrôle qui va être décrit en détail ci-dessous.

Le premier échangeur de chaleur 1 est configuré pour échanger de la chaleur avec le fluide caloporteur F1. Le premier échangeur de chaleur 1 peut fonctionner en condenseur. La chaleur de condensation du fluide réfrigérant est ainsi transférée au fluide caloporteur F1. Une puissance thermique Pw1 est ainsi fournie au fluide caloporteur F1.

Le deuxième échangeur 2 de chaleur est un échangeur bifluide. Autrement dit, le deuxième échangeur 2 de chaleur comprend un premier compartiment parcouru par le fluide réfrigérant et un deuxième compartiment parcouru par le liquide caloporteur. Les deux compartiments sont étanches et peuvent réaliser un échange thermique. L'échangeur bifluide 2 comprend ainsi une entrée 2a et une sortie 2b de fluide réfrigérant, ainsi qu'une entrée et une sortie de liquide caloporteur, non numérotées sur les figures

Chaque détendeur est un dispositif de détente du fluide réfrigérant. Chaque détendeur est configuré pour faire varier une section de passage du fluide réfrigérant. Chaque détendeur comprend une entrée de fluide réfrigérant et une sortie de fluide réfrigérant. La sortie et l'entrée sont reliées fluidiquement par un canal. Un obturateur mobile permet de contrôler la section de passage du canal, c'est-à-dire la surface de passage offerte au fluide réfrigérant. Le détendeur est par exemple un détendeur électronique, c'est-à-dire que l'obturateur mobile est actionné par un moteur électrique commandé par une unité électronique de contrôle. La position de l'obturateur mobile peut être contrôlée en boucle fermée, c'est-à-dire que la position de l'obturateur mobile est mesurée et ajustée en temps réel de façon à atteindre une consigne de position.

Le premier détendeur 31 est configuré pour faire varier une section de passage du fluide réfrigérant dans la portion de boucle principale A située en aval du premier échangeur 1 de chaleur. Le deuxième détendeur 32 est configuré pour faire varier une section de passage du fluide réfrigérant dans la première branche de dérivation B.

Selon l'exemple illustré, le système de conditionnement thermique 100 est un système de condition thermique pour véhicule automobile.

Le fluide caloporteur F1 est, dans le mode de réalisation de la figure 1, un flux d'air intérieur Fi à un habitacle d'un véhicule automobile. Le premier échangeur 1 de chaleur est disposé dans l'installation de chauffage, ventilation et/ou climatisation.

Le deuxième échangeur de chaleur 2 est couplé thermiquement avec un élément 25 d'une chaine de traction du véhicule. Le couplage thermique est, sur l'exemple illustré, réalisé par l'intermédiaire du liquide caloporteur du circuit de liquide caloporteur 20. Pour cela, le liquide caloporteur circulant dans le circuit 20 de liquide caloporteur réalise un échange thermique avec l'élément 25 de la chaine de traction du véhicule.

Le deuxième échangeur de chaleur 2 permet ainsi d'absorber de la chaleur de l'élément 25 de la chaine de traction du véhicule. La chaleur dissipée par le fonctionnement de l'élément 25 est transférée au liquide caloporteur du circuit 20. Suivant les conditions de fonctionnement, la température de l'élément 25 peut être maintenue dans une limite acceptable, ou la chaleur absorbée peut être transférée à un autre organe dans le but de chauffer cet autre organe.

L'élément 25 de la chaine de traction électrique comprend par exemple un moteur électrique de traction du véhicule. En variante, ou de manière complémentaire, l'élément 25 de la chaine de traction électrique comprend un module électronique de pilotage d'un moteur électrique de traction du véhicule. En variante encore ou de manière complémentaire, l'élément 25 de la chaine de traction électrique comprend une batterie de stockage d'énergie électrique.

La première branche de dérivation B relie fluidiquement un premier point de raccordement 11 disposé sur la boucle principale A en aval du compresseur 7 et en amont du premier échangeur 1 à un deuxième point de raccordement 12 disposé sur la boucle principale A en aval du premier détendeur 31 et en amont du deuxième échangeur 2. On entend ainsi que la première branche de dérivation B établit une communication fluidique entre le premier point de raccordement 11 et le deuxième point de raccordement 12. La première branche de dérivation B comporte un deuxième dispositif de détente 32.

La boucle principale A de fluide réfrigérant comprend un dispositif d'accumulation 8 de fluide réfrigérant disposé en aval du premier échangeur 1 et en amont du premier détendeur 31. Le dispositif d'accumulation 8 de fluide réfrigérant est une bouteille déshydratante.

La présente invention propose un procédé de contrôle d'un système de conditionnement thermique 100, le système de conditionnement thermique 100 comprenant:

- un circuit 20 de liquide caloporteur configuré pour faire circuler un liquide caloporteur,
- un circuit de fluide réfrigérant 10 comportant :

-- une boucle principale A comprenant successivement selon un sens d'écoulement du fluide réfrigérant:

--- un compresseur 7,
--- un premier échangeur 1 de chaleur configuré pour fournir une puissance thermique Pw1 à un fluide caloporteur F1,

--- un premier détendeur 31,
--- un deuxième échangeur 2 de chaleur agencé conjointement sur le circuit de fluide réfrigérant 10 et sur le circuit de liquide caloporteur 20 de façon à permettre un échange de chaleur entre le fluide réfrigérant et le liquide caloporteur,

-- une première branche de dérivation B permettant au fluide réfrigérant en sortie du compresseur 7 de rejoindre le deuxième échangeur 2 en contournant le premier échangeur 1 et le premier détendeur 31, la première branche de dérivation B comprenant un deuxième détendeur 32,

le procédé de contrôle comportant les étapes :

(i) Recevoir une consigne de puissance thermique C_Pw à fournir au moins au fluide caloporteur F1,
(ii) Si la consigne de puissance thermique C_Pw est inférieure à un seuil minimal prédéterminé P_Pw_min :
(iii) Maintenir le régime de rotation du compresseur 7 dans une plage de régime prédéterminée N1, N2,
(iv) Déterminer une température de consigne C_T_F1 du fluide caloporteur F1 en sortie du premier échangeur 1 à partir de la consigne de puissance thermique C_Pw reçue,
(v) Déterminer une température réelle T_F1_o du fluide caloporteur F1 en sortie du premier échangeur 1,
(vi) Contrôler une section de passage du deuxième détendeur 32 pour qu'une différence D entre la température de consigne C_T_F1 déterminée du fluide caloporteur F1 et la température réelle T_F1_o déterminée du fluide caloporteur F1 soit inférieure à un premier seuil prédéterminé, et
(vii) Contrôler une section de passage du premier détendeur 31 pour que le fluide réfrigérant en entrée du compresseur 7 soit à l'état de vapeur surchauffée.

La première branche de dérivation B permet d'envoyer un débit de fluide réfrigérant gazeux vers l'entrée 2a du deuxième échangeur 2 de chaleur. En ajustant le débit respectif de fluide réfrigérant dans la boucle principale A et dans la première branche de dérivation B, il est ainsi possible d'obtenir un mélange gazeux à l'entrée 2a du deuxième échangeur 2. La récupération d'énergie au niveau du deuxième échangeur 2 est alors inhibée, c'est-à-dire que la puissance thermique récupérée est nulle ou au moins négligeable. La puissance thermique Pw1 fournie au fluide caloporteur F1 est ainsi sensiblement égale à la puissance nécessaire à l'entrainement du compresseur 7. Il est ainsi possible d'assurer une faible valeur de puissance de chauffage de manière contrôlée et stable. En particulier, le compresseur 7 peut fonctionner en continu.

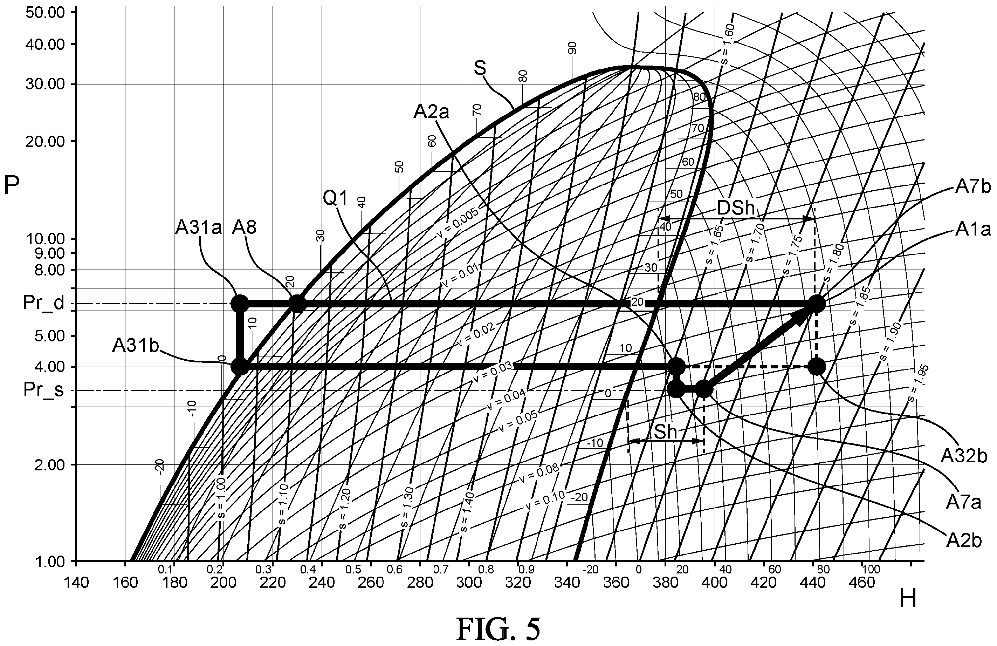

La figure 5 illustre l'état thermodynamique du fluide réfrigérant lors du cycle thermodynamique décrit. La valeur sur l'axe des abscisses est l'enthalpie du fluide réfrigérant. La valeur sur l'axe des ordonnées est la pression du fluide réfrigérant, sur une échelle logarithmique. La courbe S est la courbe de saturation caractéristique du fluide réfrigérant employé. La région du diagramme comprise entre la courbe de saturation S et l'axe des abscisses correspond au domaine diphasique du fluide réfrigérant.

Le point A7a représente l'état du fluide réfrigérant en entrée du compresseur 7. La pression du fluide réfrigérant y est égale à la pression d'aspiration Pr_s. Le point A7b représente l'état du fluide réfrigérant en sortie du compresseur 7. La pression y est égale à la pression de refoulement Pr_d. Le point A1a représente l'état du fluide réfrigérant à l'entrée 1a du premier échangeur 1.

Le débit de fluide réfrigérant à haute pression en sortie du compresseur 7 est divisé entre un premier débit qui circule dans la boucle principale A et traverse le premier échangeur 1, et un deuxième débit qui circule dans la première branche de dérivation B, la division en deux débits étant réalisée au niveau du premier point de raccordement 11. Le fluide réfrigérant circulant dans la boucle principale A se condense dans le premier échangeur 1 en cédant de la chaleur au fluide caloporteur F1. Le signe Q1 indique la quantité de chaleur transférée, et le point A8 caractérise l'état du fluide réfrigérant en sortie du dispositif d'accumulation 8. Le fluide réfrigérant sortant par la sortie 1b du premier échangeur 1 est ensuite détendu au niveau du premier détendeur 31. Le point A31a caractérise l'état du fluide réfrigérant en entrée du premier détendeur 31 et le point A31b l'état en sortie du premier détendeur 31, c'est-à-dire après la détente. En ce point, le fluide réfrigérant est diphasique, en étant majoritairement sous forme liquide.

Le débit circulant dans la première branche de dérivation B subit une détente au niveau du deuxième détendeur 32. Le point A32b représente l'état thermodynamique du fluide réfrigérant en sortie du deuxième détendeur 32. En ce point du cycle, le fluide réfrigérant est à l'état de vapeur surchauffée. Ce débit de vapeur surchauffée circulant dans la première branche de dérivation B est mélangé au débit de fluide réfrigérant diphasique circulant dans la boucle principale A au niveau du deuxième point de raccordement 12, et rejoint le deuxième échangeur 2. La point A2a illustre l'état du point de mélange. Le débit de vapeur surchauffé est contrôlé de façon à ce que le mélange obtenu soit sous forme entièrement gazeuse, c'est-à-dire sous forme de vapeur surchauffée. La fiabilité du compresseur 7 est ainsi assurée, puisque le compresseur 7 ne risque pas de recevoir de réfrigérant à l'état liquide. Le point A2b représente l'état du fluide réfrigérant en sortie du deuxième échangeur 2. L'échange de chaleur est négligeable au niveau du deuxième échangeur 2. Sur la figure 5, la perte de charge générée par le deuxième échangeur 2 a été exagérée pour améliorer la lisibilité de la figure. Le fluide réfrigérant sortant du deuxième échangeur 2 rejoint l'entrée du compresseur 7, caractérisée par le point A7a. Le cycle thermodynamique est ainsi bouclé.

Le seuil minimal prédéterminé P_Pw_min de puissance thermique à fournir est par exemple 120 W. Autrement dit, lorsque la puissance thermique à fournir est supérieur à cette valeur seuil, le procédé proposé n'est pas appliqué.

La plage de régime prédéterminée N1, N2 dans laquelle le régime de rotation du compresseur 7 est maintenu correspond à une plage de régime proche du régime minimal de fonctionnement du compresseur 7.

La plage de régime prédéterminée dans laquelle le régime de rotation du compresseur 7 est maintenue est par exemple la plage de régime comprise entre 580 tr/min et 800 tr/min. Autrement dit, dans ce cas la borne basse N1 de la plage de régime dans lequel le régime est maintenu vaut 580 tr/min et la borne haute N2 vaut 800 tr/min. Ces deux bornes de régime peuvent dépendre du type de compresseur utilisé, et en particulier de sa cylindrée.

Le contrôle de la section de passage du premier détendeur 31 est par exemple réalisé par un régulateur proportionnel, intégral. De même, le contrôle de la section de passage du deuxième détendeur 32 peut être réalisé par un régulateur proportionnel, intégral. Ce type de régulateur assure une régulation robuste tout en restant simple à programmer et à mettre au point.

Selon un mode de mise en œuvre du procédé, à l'étape (iii), le régime de rotation du compresseur 7 est régulé à une valeur constante prédéterminée.

Autrement dit, le régime de rotation du compresseur 7 est maintenu dans une plage de régime étroite et centrée sur une valeur constante. Le fonctionnement du système thermique 100 est ainsi plus stable, ce qui améliore la précision du contrôle.

La valeur de régulation du régime de rotation du compresseur 7 est de préférence égale à au régime minimal de fonctionnement stable du compresseur 7. La valeur de régulation du régime de rotation du compresseur 7 est par exemple égale à 600 tr/min.

Plus précisément, à l'étape (iv), la consigne de température du fluide caloporteur F1 est ici déterminée à partir de la consigne de puissance thermique C_Pw reçue, à partir d'une consigne de débit C_Q_F1 de fluide caloporteur F1 et à partir d'une température T_F1_i du fluide caloporteur F1 en entrée du premier échangeur 1. La consigne de débit C_Q_F1 de fluide caloporteur F1 peut valoir par exemple 90 kg/h, lorsque le fluide caloporteur F1 est l'air à destination de l'habitacle.

En effet, la consigne de puissance thermique C_Pw à fournir au fluide caloporteur F1 est égale à la capacité calorifique CC du fluide caloporteur F1, multiplié par la consigne de débit C_Q_F1 de fluide caloporteur F1, et multiplié par la différence de température du fluide caloporteur F1 au sein du deuxième échangeur 2. Soit :

[Math. 1]

$$C\_Pw = CC * C\_Q\_F1 * (C\_T\_F1 - T\_F1\_i)$$

Cette équation permet d'obtenir simplement la consigne de température du fluide caloporteur F1. La température T_F1_i du fluide caloporteur F1 en amont du premier échangeur 1 est par exemple mesuré par un capteur disposé dans le flux de fluide caloporteur.

Cette modélisation permet d'obtenir un contrôle précis tout est étant simple à mettre en œuvre et peu couteuse en ressources de calculs.

L'étape (vi) comprend la sous-étape :

(vi-1) Si la différence entre la consigne de température C_T_F1 déterminée du fluide caloporteur F1 et la température réelle déterminée du fluide caloporteur F1 est supérieure à 0, réduire la section de passage du deuxième détendeur 32. Autrement dit, lorsque la température réelle du fluide caloporteur F1 est supérieure à la consigne, il convient de réduire la puissance thermique qui est fournie au fluide caloporteur F1. Pour cela, la section de passage du deuxième détendeur 32 est diminuée de façon à faire baisser la pression d'aspiration du compresseur 7, et de là le débit de fluide réfrigérant mis en pression.

De même, l'étape (vi) comprend la sous-étape :

(vi-2) Si l'écart calculé est inférieur à 0, augmenter la section de passage du deuxième détendeur 32. A l'inverse du cas précédent, lorsque la température réelle du fluide caloporteur F1 est inférieure à la consigne, il convient d'augmenter la puissance thermique fournie au fluide caloporteur F1. Pour cela, la section de passage du deuxième détendeur 32 est augmentée de façon à augmenter la pression d'aspiration du compresseur 7 et accroitre le débit de fluide réfrigérant mis en pression par le compresseur 7.

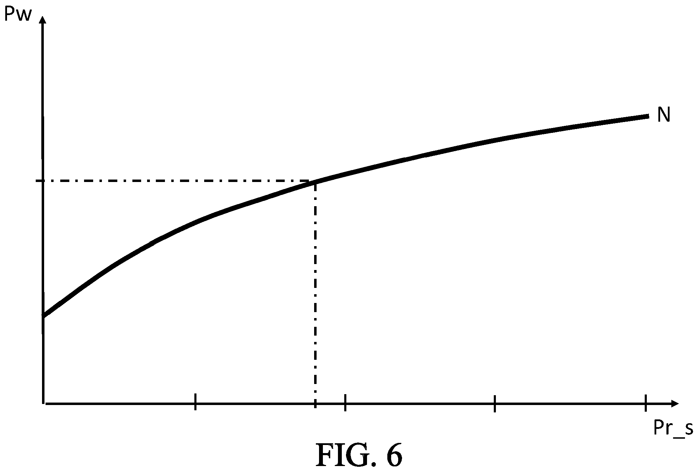

La figure 6 illustre le fonctionnement de l'étape (vi). La courbe tracée représente la puissance thermique fournie par le compresseur 7 au fluide réfrigérant en fonction de la pression d'aspiration Pr_s, pour un régime de rotation N fixe et une pression de refoulement Pr_d fixe. La puissance thermique fournie au fluide réfrigérant est une fonction croissante de la pression d'aspiration, au moins sur l'intervalle utile représenté.

Le compresseur 7 est configuré pour faire passer le fluide réfrigérant d'une pression d'aspiration Pr_s à une pression de refoulement Pr_d.

Selon une variante de réalisation, le procédé comporte les étapes :

(v-1) Déterminer une consigne de pression d'aspiration C_Pr_s à partir de la consigne de température C_T_F1 du fluide caloporteur F1, à partir de la consigne de débit C_Q_F1 de fluide caloporteur F1, à partir d'une température du fluide caloporteur F1 en entrée du premier échangeur 1, et à partir du régime de rotation du compresseur 7 régulé à une valeur constante prédéterminée,

(v-2) Contrôler une section de passage du deuxième détendeur 32 pour qu'une différence entre la pression d'aspiration Pr_s et la consigne de pression d'aspiration C_Pr_s soit inférieure à un deuxième seuil prédéterminé.

Dans cette variante, le contrôle de la température du fluide caloporteur F1 en sortie du premier échangeur 1, c'est-à-dire après échange thermique avec le fluide réfrigérant au sein du premier échangeur 1, est réalisé en se basant sur la pression de refoulement comme paramètre de contrôle. En effet, la température du fluide caloporteur F1 en sortie du premier échangeur 1 est directement liée à la température de condensation du fluide réfrigérant, et donc à la pression de condensation du fluide réfrigérant. Cette pression de condensation est, en négligeant les pertes de charges, égale à la pression de refoulement du compresseur. Le contrôle peut ainsi être réalisé sans mesure directe de la température du fluide caloporteur F1, ce qui permet d'économiser un capteur ainsi que la chaine de mesure associée.

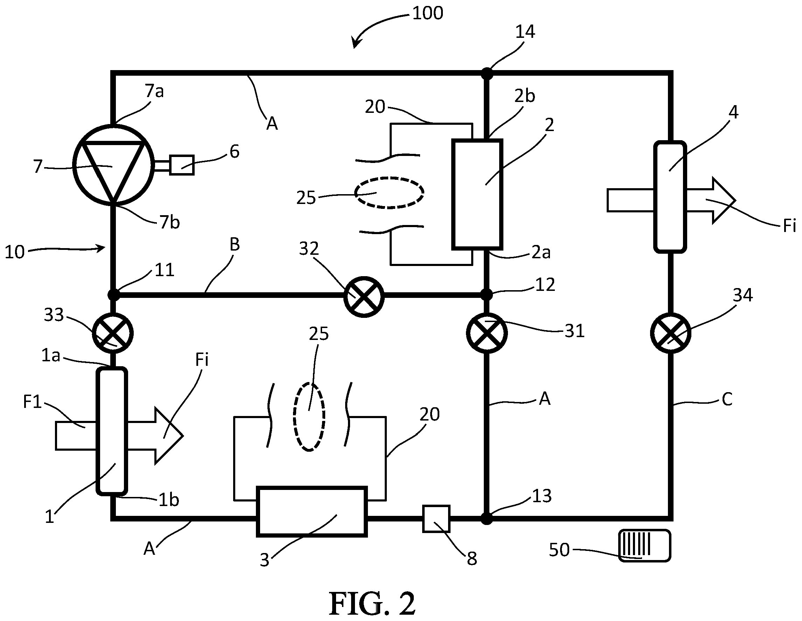

La figure 2 illustre un deuxième mode de réalisation du système de conditionnement thermique, dans lequel le procédé est mis en œuvre. La boucle principale A du circuit de fluide réfrigérant 10 comprend un troisième détendeur 33 agencé en aval du compresseur 7 et en amont du premier échangeur de chaleur 1. Le procédé comprend l'étape :

(viii) Contrôler une section de passage du fluide réfrigérant dans le troisième détendeur 33 de façon à ce qu'une perte de charge générée par le troisième détendeur 33 soit inférieure à un troisième seuil prédéterminé.

Le troisième seuil prédéterminé peut être un seuil absolu. Le troisième seuil prédéterminé est par exemple égal à 0,5 Bar. Le troisième seuil prédéterminé peut être un seuil relatif. Le troisième seuil prédéterminé est par exemple égal à 5% de la pression maximale de refoulement du compresseur 7.

La section de passage du fluide réfrigérant dans le troisième détendeur 33 peut être contrôlée de façon à ce que le troisième détendeur 33 soit en position d'ouverture maximale. Ainsi, la perte de charge générée par le troisième détendeur 33 est minimale.

Le but du troisième détendeur 33 est, dans certaines phases de fonctionnement non détaillées ici, de créer une détente partielle dans le but d'augmenter la pression de refoulement du compresseur 7 et ainsi augmenter également le travail fourni par le compresseur 7 au fluide réfrigérant du circuit 10. La montée est température du système de conditionnement thermique peut ainsi être accélérée. Dans le cadre du procédé décrit ici, cette pré-détente n'est pas souhaitable, le troisième détendeur 33 est donc mis dans une position dans laquelle la détente générée est minime ou négligeable.

Selon un mode de réalisation, le procédé comprend les étapes :

(vii1) Déterminer une surchauffe Sh du fluide réfrigérant en entrée du compresseur 7,

(vii2) Contrôler une section de passage du premier détendeur 31 de façon à ce que la surchauffe Sh du fluide réfrigérant en entrée du compresseur 7 soit égale à une valeur de consigne C_Sh.

La consigne C_Sh de surchauffe en entrée du compresseur 7 est choisie de façon à garantir que le réfrigérant aspiré par le compresseur 7 soit sous forme entièrement gazeuse. La fiabilité du compresseur 7 est ainsi garantie.

La valeur de consigne C_Sh de la surchauffe du fluide réfrigérant en entrée du compresseur 7 est comprise entre 5°C et 15°C.

Par définition, la surchauffe en entrée du compresseur 7 est égale à la température du fluide réfrigérant en entrée du compresseur 7 moins la valeur de la température de condensation du fluide réfrigérant correspondant à la pression du fluide réfrigérant en entrée du compresseur 7, c'est-à-dire la pression d'aspiration Pr_s. La température du fluide réfrigérant est par exemple mesurée par un capteur de température dont l'élément sensible est au contact du fluide réfrigérant. De même, la pression du fluide réfrigérant est par exemple mesurée par un capteur de pression dont l'élément sensible est au contact du fluide réfrigérant.

Le mélange du fluide réfrigérant circulant dans la première branche de dérivation B, qui est en phase gazeuse sous forme de vapeur surchauffée, et du fluide réfrigérant circulant dans la boucle principale A, qui est principalement en phase liquide, permet d'obtenir un mélange sous forme de vapeur surchauffée.

Selon un autre mode de réalisation, le procédé peut comprendre les étapes :

(vii1') Déterminer une surchauffe Dsh du fluide réfrigérant en sortie du compresseur 7,

(vii2') Contrôler une section de passage du deuxième détendeur 32 de façon à ce que la surchauffe du fluide réfrigérant en sortie du compresseur 7 soit égale à une valeur de consigne C_Dsh.

Contrôler la consigne C_Dsh de surchauffe en sortie du compresseur 7 est une autre manière de garantir que le réfrigérant aspiré par le compresseur 7 soit sous forme entièrement gazeuse. La fiabilité du compresseur 7 est ainsi garantie.

La valeur de consigne C_Dsh de la surchauffe du fluide réfrigérant en sortie du compresseur 7 est comprise entre 15°C et 35°C.

La surchauffe Dsh en sortie du compresseur 7 est égale à la température mesurée du fluide réfrigérant en sortie du compresseur 7 moins la valeur de la température de condensation du fluide réfrigérant correspondant à la pression du fluide réfrigérant en sortie du compresseur 7, c'est-à-dire la pression de refoulement Pr_d. Le contrôle de la valeur de la surchauffe en sortie du compresseur 7 permet de contrôler la valeur de la surchauffe en entrée du compresseur 7.

La figure 2 illustre un deuxième mode de réalisation du système de conditionnement thermique 100, dans lequel le procédé de contrôle est mis en œuvre. Dans ce deuxième mode de réalisation, la boucle principale A du système de conditionnement thermique 100 comprend, en aval du premier échangeur 1 de chaleur et en amont du premier dispositif de détente 31, un troisième échangeur de chaleur 3 agencé conjointement sur le circuit de fluide réfrigérant 10 et sur le circuit 20 de liquide caloporteur de façon à permettre un échange de chaleur entre le fluide réfrigérant et le liquide caloporteur. Le troisième échangeur 3 de chaleur est configuré pour fournir une puissance thermique Pw3 au liquide caloporteur. A l'étape (i) du procédé de contrôle, la consigne de puissance thermique Pw à fournir est une puissance thermique totale Pw_tot, somme de la puissance thermique Pw1 à fournir au fluide caloporteur F1 au niveau du premier échangeur 1 et de la puissance thermique Pw3 à fournir au liquide caloporteur au niveau du troisième échangeur 3.

Alors que dans le premier mode de réalisation, le fluide réfrigérant fournit une puissance thermique seulement au premier fluide caloporteur F1 au niveau du premier échangeur 1, dans le deuxième mode de réalisation le fluide réfrigérant fournit une puissance thermique également au liquide caloporteur du circuit 20, au niveau du troisième échangeur 3. La puissance thermique totale à fournir Pw, est répartie entre la puissance thermique Pw1 fournie par le premier échangeur 1 au premier fluide caloporteur F1 et la puissance thermique Pw3 fournie par le troisième échangeur 3 au liquide caloporteur circulant dans le circuit 20 de liquide caloporteur.

Dans ce deuxième mode de réalisation, la boucle principale A comprend, en série et dans cet ordre : le compresseur 7, le premier point de raccordement 11, le troisième détendeur 33, le premier échangeur 1, le troisième échangeur 3, le dispositif d'accumulation 8, le premier détenteur 31, le deuxième point de raccordement 12, le deuxième échangeur 2, et la portion de circuit s'étendant entre la sortie 2b du deuxième échangeur 2 et l'entrée 7a du compresseur 7. La condensation du fluide réfrigérant à haute pression a lieu en partie dans le premier échangeur 1 et en partie dans le troisième échangeur 3. Le premier fluide caloporteur F1 peut ainsi être chauffé au niveau du premier échangeur 1 et le liquide caloporteur du circuit 20 peut être chauffé au niveau du troisième échangeur 3.

Le troisième échangeur 3 de chaleur est un échangeur bifluide. Sa construction peut être analogue à celle du deuxième échangeur 2. Ces échangeurs sont par exemple des échangeurs à plaques.

Dans cette configuration, la première branche de dérivation B permet au fluide réfrigérant en sortie du compresseur 7 de rejoindre le deuxième échangeur 2 en contournant le premier échangeur 1, le troisième échangeur 3 et le premier détendeur 31. En effet, la première branche de dérivation B relie un point disposé en amont du troisième détendeur 33 à un point disposé en aval du premier détendeur 31.

La boucle principale A de fluide réfrigérant comprend un dispositif d'accumulation 8 de fluide réfrigérant disposé en aval du troisième échangeur 3 et en amont du premier détendeur 31.

Le troisième échangeur de chaleur 3 est couplé thermiquement à l'élément 25 d'une chaine de traction du véhicule, par l'intermédiaire du liquide caloporteur du circuit de liquide caloporteur 20.

Le troisième échangeur de chaleur 3 permet ainsi de fournir une puissance thermique à l'élément 25 de la chaine de traction du véhicule, c'est-à-dire de chauffer cet élément 25 afin d'augmenter sa température. Le deuxième échangeur 2 permet lui de recevoir une puissance thermique de l'élément 25, afin de le refroidir ou d'effectuer une récupération d'énergie. Le circuit de liquide caloporteur 20 n'a pas été détaillé, et est représenté par des traits interrompus au niveau du troisième échangeur 3 et au niveau du deuxième échangeur 2. Pour simplifier la représentation et éviter des croisements entre les lignes des différents circuits, le circuit 20 est représenté en deux parties distinctes.

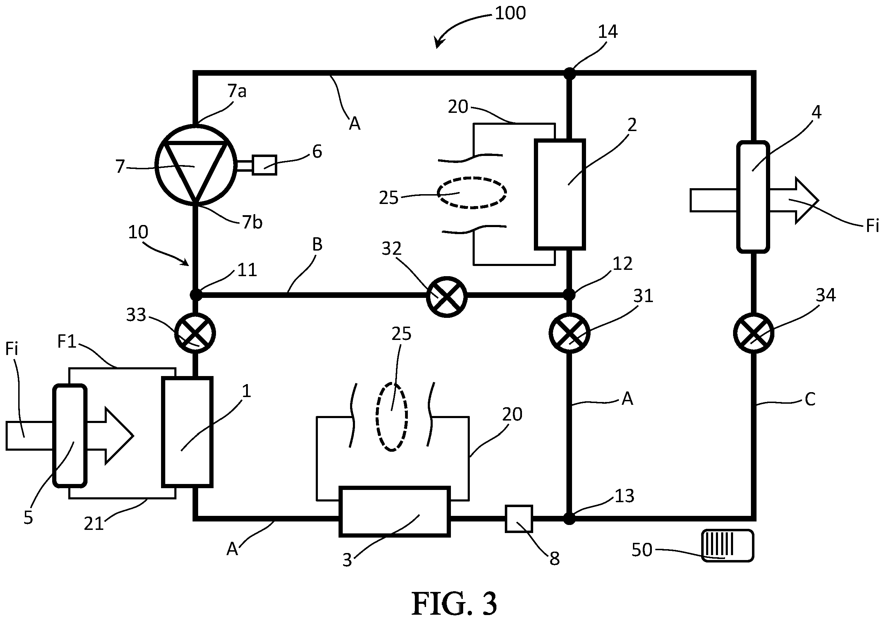

La figure 3 illustre une variante du mode de réalisation de la figure 2. Selon cette variante, le fluide caloporteur F1 est un liquide caloporteur configuré pour circuler dans un cinquième échangeur de chaleur 5 configuré pour échanger de la chaleur avec un flux d'air intérieur Fi à l'habitacle du véhicule.

Le cinquième échangeur de chaleur 5 est disposé sur un deuxième circuit de liquide caloporteur 21. Le chauffage de l'habitacle est réalisé de manière indirecte, puisque la chaleur de condensation du fluide réfrigérant est d'abord transférée au liquide caloporteur du circuit 21, puis la chaleur du liquide caloporteur est transférée au flux d'air intérieur Fi au niveau du cinquième échangeur 5. Une pompe, non représentée, peut faire circuler le liquide caloporteur dans le circuit 21. Le rôle des autres échangeurs de chaleur est le même que dans le premier mode de réalisation, illustré sur la figure 2. Le circuit de liquide caloporteur 21 pour le chauffage habitacle et le circuit de liquide caloporteur 20 pour le couplage thermique avec l'élément 25 de la chaine de transmission sont disjoints, c'est-à-dire qu'ils ne communiquent pas.

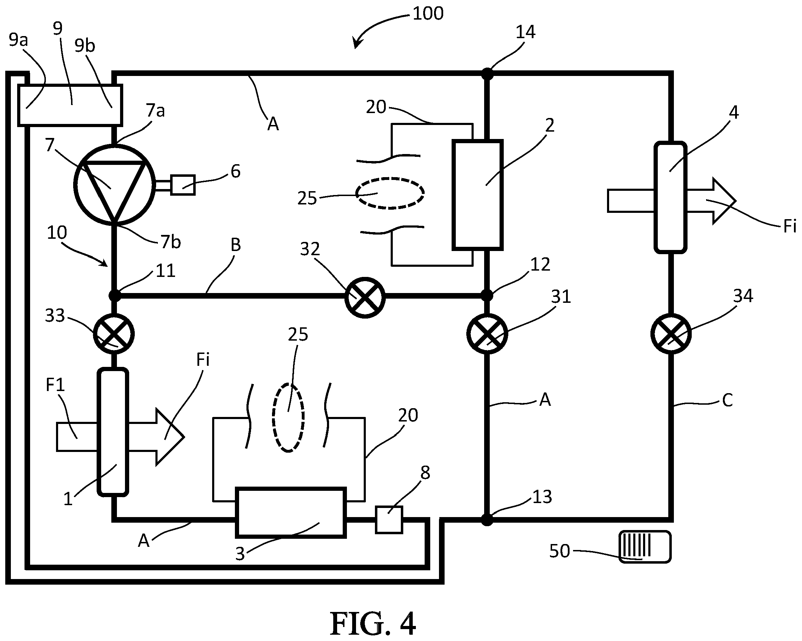

Sur le deuxième mode de réalisation ainsi que sur ses variantes illustrées sur les figures 3 et 4, le circuit 10 de fluide réfrigérant comprend une deuxième branche de dérivation C disposée en parallèle du premier détendeur 31 et du troisième échangeur de chaleur 3. La deuxième branche de dérivation C comprend un quatrième détendeur 34 et un quatrième échangeur de chaleur 4.

La deuxième branche de dérivation C relie fluidiquement un troisième point de raccordement 13 disposé sur la boucle principale A en aval du troisième échangeur 3 et en amont du premier détendeur 31 à un quatrième point de raccordement 14 disposé sur la boucle principale A en aval du deuxième échangeur 2 et en amont du compresseur 7. La deuxième branche de dérivation C comporte un quatrième dispositif de détente 34 disposé en amont d'un quatrième échangeur 4 de chaleur.

Le quatrième échangeur 4 de chaleur est configuré pour échanger de la chaleur avec un flux d'air Fi intérieur à l'habitacle du véhicule. Le quatrième échangeur 4 de chaleur est disposé dans l'installation de chauffage, ventilation et/ou climatisation. Le quatrième échangeur 4 permet de refroidir le flux d'air Fi à destination de l'habitacle.

Dans le mode de réalisation de la figure 1 ainsi que dans le mode de réalisation des figures 2 et 4, où le premier échangeur 1 est disposé dans l'installation de chauffage, ventilation et/ou climatisation, le premier échangeur 1 est disposé en aval du quatrième échangeur 4 selon un sens d'écoulement du flux d'air intérieur Fi. Afin de simplifier les figures, le premier échangeur 1 et le quatrième échangeur 4 sont représentés éloignés l'un de l'autre et non cote à cote.

La figure 4 représente une autre variante du mode de réalisation du système de conditionnement thermique 100 de la figure 2. La boucle principale A de fluide réfrigérant comprend ici un échangeur interne 9 configuré pour permettre un échange de chaleur entre le fluide réfrigérant à haute pression en aval du deuxième échangeur de chaleur 2 et en amont du premier détendeur 31, et le fluide réfrigérant à basse pression en aval du troisième échangeur 3 et en amont du compresseur 7.

L'échangeur de chaleur interne 9 comportant une première section d'échange thermique 9a disposée en aval du dispositif d'accumulation 8 de fluide réfrigérant et amont du premier dispositif de détente 31, et une deuxième section d'échange thermique 9b disposée en aval du deuxième échangeur de chaleur 2. Un échange de chaleur est réalisé entre le fluide réfrigérant dans la première section d'échange thermique 9a et le fluide réfrigérant dans la deuxième section d'échange thermique 9b. L'échangeur interne 9 permet d'améliorer les performances du système de conditionnement thermique 100. La première section d'échange thermique 9a est disposée entre la sortie du dispositif d'accumulation 8 et le troisième point de raccordement 13. La deuxième section d'échange thermique 9b est disposée entre le quatrième point de raccordement 14 et l'entrée 7a du compresseur 7.

Selon une autre variante non représentée, la boucle principale A de fluide réfrigérant peut comporter un échangeur de sous-refroidissement disposé en aval du dispositif d'accumulation 8 et en amont du premier détendeur 31. L'échangeur de sous-refroidissement permet d'augmenter la puissance thermique de refroidissement, lorsque le système de conditionnement thermique est utilisé en mode refroidissement.

## Revendications

1. Procédé de contrôle d'un système de conditionnement thermique (100) notamment pour véhicule automobile, le système de conditionnement thermique (100) comprenant:

    - un circuit (20) de liquide caloporteur configuré pour faire circuler un liquide caloporteur,
    - un circuit de fluide réfrigérant (10) comportant :

        -- une boucle principale (A) comprenant successivement selon un sens d'écoulement du fluide réfrigérant:

            --- un compresseur (7),
            --- un premier échangeur (1) de chaleur configuré pour fournir une puissance thermique (Pw1) à un fluide caloporteur (F1),
            --- un premier détendeur (31),
            --- un deuxième échangeur (2) de chaleur agencé conjointement sur le circuit de fluide réfrigérant (10) et sur le circuit de liquide caloporteur (20) de façon à permettre un échange de chaleur entre le fluide réfrigérant et le liquide caloporteur,

        -- une première branche de dérivation (B) permettant au fluide réfrigérant en sortie du compresseur (7) de rejoindre le deuxième échangeur (2) en contournant le premier échangeur (1) et le premier détendeur (31), la première branche de dérivation (B) comprenant un deuxième détendeur (32),

    le procédé de contrôle comportant les étapes :

        (i) Recevoir une consigne de puissance thermique (C_Pw) à fournir au moins au fluide caloporteur (F1),
        (ii) Si la consigne de puissance thermique (C_Pw) est inférieure à un seuil minimal prédéterminé (P_Pw_min):
        (iii) Maintenir un régime de rotation du compresseur (7) dans une plage de régime prédéterminée (N1, N2),
        (iv) Déterminer une consigne (C_T_F1) de température du fluide caloporteur (F1) en sortie du premier échangeur (1) à partir de la consigne de puissance thermique (C_Pw) reçue,
        (v) Déterminer une température réelle ($T\_F1_0$) du fluide caloporteur (F1) en sortie du premier échangeur (1),
        (vi) Contrôler une section de passage du deuxième détendeur (32) pour qu'une différence (D) entre la consigne de température (C_T_F1) déterminée du fluide caloporteur (F1) et la température réelle (T_F1$_0$) déterminée du fluide caloporteur (F1) soit inférieure à un premier seuil prédéterminé, et
(vii) Contrôler une section de passage du premier détendeur (31) pour que le fluide réfrigérant en entrée du compresseur (7) soit à l'état de vapeur surchauffée.

2. Procédé selon la revendication 1, dans lequel, à l'étape (iii), le régime de rotation du compresseur (7) est régulé à une valeur constante prédéterminée.

3. Procédé selon la revendication 1 ou 2, dans lequel l'étape (vi) comprend la sous-étape :
(vi-1) Si la différence entre la consigne de température (C_T_F1) déterminée du fluide caloporteur (F1) et la température réelle déterminée du fluide caloporteur (F1) est supérieure à 0, réduire la section de passage du deuxième détendeur (32), (vi-2) Si l'écart calculé est inférieur à 0, augmenter la section de passage du deuxième détendeur (32).

4. Procédé selon l'une des revendications précédentes en combinaison avec la revendication 2, dans lequel le compresseur (7) est configuré pour faire passer le fluide réfrigérant d'une pression d'aspiration (Pr_s) à une pression de refoulement (Pr_d), et dans lequel le procédé comporte les étapes :

(v-1) Déterminer une consigne de pression d'aspiration (C_Pr_s) à partir de la consigne de température (C_T_F1) du fluide caloporteur (F1), à partir de la consigne de débit de fluide caloporteur (F1),à partir d'une température du fluide caloporteur (F1) en entrée du premier échangeur (1) et à partir du régime de rotation du compresseur (7) régulé à une valeur constante prédéterminée,
(v-2) Contrôler une section de passage du deuxième détendeur (32) pour qu'une différence entre la pression d'aspiration (Pr_s) et la consigne de pression d'aspiration (C_Pr_s) soit inférieure à un deuxième seuil prédéterminé.

5. Procédé selon l'une des revendications 1 à 4, comprenant les étapes :

(vii1) Déterminer une surchauffe (Sh) du fluide réfrigérant en entrée du compresseur (7),
(vii2) Contrôler une section de passage du premier détendeur (31) de façon à ce que la surchauffe (Sh) du fluide réfrigérant en entrée du compresseur (7) soit égale à une valeur de consigne (C_Sh).

6. Procédé selon l'une des revendications 1 à 4, comprenant les étapes :

(vii1') Déterminer une surchauffe (Dsh) du fluide réfrigérant en sortie du compresseur (7),
(vii2') Contrôler une section de passage du deuxième détendeur (32) de façon à ce que la surchauffe du fluide réfrigérant en sortie du compresseur (7) soit égale à une valeur de consigne (C_Dsh).

7. Procédé selon l'une des revendications précédentes, dans lequel la boucle principale (A) du système de conditionnement thermique (100) comprend, en aval du premier échangeur (1) de chaleur et en amont du premier dispositif de détente (31), un troisième échangeur de chaleur (3) agencé conjointement sur le circuit de fluide réfrigérant (10) et sur le circuit (20) de liquide caloporteur de façon à permettre un échange de chaleur entre le fluide réfrigérant et le liquide caloporteur, le troisième échangeur (3) de chaleur étant configuré pour fournir une puissance thermique (Pw3) au liquide caloporteur, et dans lequel à l'étape (i),
la consigne de puissance thermique (Pw) à fournir est une puissance thermique totale (Pw_tot), somme de la puissance thermique (Pw1) à fournir au fluide caloporteur (F1) au niveau du premier échangeur (1) et de la puissance thermique (Pw3) à fournir au liquide caloporteur au niveau du troisième échangeur (3).

8. Procédé selon l'une des revendications 1 à 7, dans lequel le fluide caloporteur (F1) est un flux d'air intérieur (Fi) à un habitacle d'un véhicule automobile.

9. Procédé selon l'une des revendications 1 à 7, dans lequel le fluide caloporteur (F1) est un liquide caloporteur configuré pour circuler dans un cinquième échangeur de chaleur (5) configuré pour échanger de la chaleur avec un flux d'air intérieur (Fi) à l'habitacle du véhicule.

10. Procédé selon l'une des revendications précédentes, dans lequel le deuxième échangeur de chaleur (2) est couplé thermiquement avec un élément (25) d'une chaine de traction du véhicule, par l'intermédiaire du liquide caloporteur du circuit de liquide caloporteur (20).

11. Système de conditionnement thermique (100) notamment pour véhicule automobile comprenant:

- un circuit (20) de liquide caloporteur configuré pour faire circuler un liquide caloporteur,
- un circuit de fluide réfrigérant (10) comportant :

-- une boucle principale (A) comprenant successivement selon un sens d'écoulement du fluide réfrigérant:

--- un compresseur (7),
--- un premier échangeur (1) de chaleur configuré pour fournir une puissance thermique (Pw1) à un fluide caloporteur (F1),
--- un premier détendeur (31),
--- un deuxième échangeur (2) de chaleur agencé conjointement sur le circuit de fluide réfrigérant (10) et sur le circuit de liquide caloporteur (20) de façon à permettre un échange de chaleur entre le fluide réfrigérant et le liquide caloporteur,

-- une première branche de dérivation (B) permettant au fluide réfrigérant en sortie du compresseur (7) de rejoindre le deuxième échangeur (2) en contournant le premier échangeur (1) et le premier détendeur (31), la première branche de dérivation (B) comprenant un deuxième détendeur (32),

- Une unité électronique de contrôle (50) configurée pour mettre en œuvre le procédé de contrôle selon l'une des revendications précédentes.

12. Système de conditionnement thermique (100) selon la revendication précédente, dans lequel le circuit (10) de fluide réfrigérant comprend une deuxième branche de dérivation (C) disposée en parallèle du premier détendeur (31) et du troisième échangeur de chaleur (3), la deuxième branche de dérivation (C) comprenant un quatrième détendeur (34) et un quatrième échangeur de chaleur (4), et dans lequel le quatrième échangeur (4) de chaleur est configuré pour échanger de la chaleur avec un flux d'air (Fi) intérieur à l'habitacle du véhicule.

13. Système de conditionnement thermique (100) selon la revendication 11 ou 12, dans lequel la boucle principale (A) de fluide réfrigérant comprend un dispositif d'accumulation (8) de fluide réfrigérant disposé en aval du premier échangeur (1) et en amont du premier détendeur (31).

**Patentansprüche**

1. Verfahren zur Steuerung eines Klimatisierungssystems (100), wobei das Klimatisierungssystem (100) insbesondere für ein Kraftfahrzeug bestimmt ist und umfasst:

- einen Wärmeträgerflüssigkeitskreislauf (20), der so ausgelegt ist, dass er eine Wärmeträgerflüssigkeit zirkulieren lässt,
- einen Kältemittelkreislauf (10) mit:

-- einen Hauptkreislauf (A), der in Strömungsrichtung des Kältemittels nacheinander umfasst:

--- einen Kompressor (7),
--- einen ersten Wärmetauscher (1), der so ausgelegt ist, dass er einer Wärmeträgerfluid (F1) eine Wärmeleistung (Pw1) zuführt,
--- ein erstes Expansionsventil (31),
--- einen zweiten Wärmetauscher (2), der gemeinsam am Kältemittelkreislauf (10) und am Wärmeträgerflüssigkeitskreislauf (20) angeordnet ist, um einen Wärmeaustausch zwischen dem Kältemittel und der Wärmeträgerflüssigkeit zu ermöglichen,

-- einen ersten Bypass-Zweig (B), der es dem aus dem Kompressor (7) austretenden Kältemittel ermöglicht, unter Umgehung des ersten Wärmetauschers (1) und des ersten Expansionsventils (31) zum zweiten Wärmetauscher (2) zu gelangen, wobei der erste Bypass-Zweig (B) ein zweites Expansionsventil (32) umfasst,

wobei das Steuerungsverfahren die folgenden Schritte umfasst:

(i) Empfangen eines Sollwerts für die thermische Leistung (C_Pw), die mindestens an die Wärmeträgerfluid (F1) abzugeben ist,
(ii) Wenn der Sollwert für die thermische Leistung (C_Pw) unter einem vorgegebenen Mindestschwellenwert (P_Pw_min) liegt:
(iii) Aufrechterhalten einer Drehzahl des Kompressors (7) in einem vorgegebenen Drehzahlbereich (N1, N2),
(iv) Bestimmen eines Temperatursollwerts (C_T_F1) für die Temperatur der Wärmeträgerfluid (F1) am Ausgang des ersten Wärmetauschers (1) ausgehend von dem empfangenen Sollwert für die thermische Leistung (C_Pw),
(v) Bestimmen einer Ist-Temperatur (T_F1_o) der Wärmeträgerfluid (F1) am Ausgang des ersten Wärmetauschers (1),
(vi) einen Durchflussquerschnitt des zweiten Expansionsventils (32) so regeln, dass eine Differenz (D) zwischen dem ermittelten Temperatursollwert (C_T_F1) und der ermittelten Ist-Temperatur (T_F1_o) kleiner als ein erster vorbestimmter Schwellenwert ist, und
(vii) einen Durchflussquerschnitt des ersten Expansionsventils (31) so zu steuern, dass sich das in den Kompressor (7) eintretende Kältemittel im Zustand überhitzten Dampfes befindet.

2. Verfahren nach Anspruch 1, wobei in Schritt (iii) die Drehzahl des Kompressors (7) auf einen vorbestimmten konstanten Wert geregelt wird.

3. Verfahren nach Anspruch 1 oder 2, wobei Schritt (vi) den folgenden Teilschritt umfasst:
   (vi-1) Wenn die Differenz (D) zwischen dem ermittelten Temperatursollwert (C_T_F1) und der ermittelten Ist-Temperatur (T_F1_o) der Wärmeträgerfluid (F1) größer als 0 ist, Verkleinern des Durchflussquerschnitts des zweiten Expansionsventils (32),
   (vi-2) Wenn die berechnete Abweichung kleiner als 0 ist, Vergrößern des Durchflussquerschnitts des zweiten Expansionsventils (32).

4. Verfahren nach einem der vorstehenden Ansprüche in Kombination mit Anspruch 2, wobei der Kompressor (7) so ausgelegt ist, dass er das Kältemittel von einem Ansaugdruck (Pr_s) auf einen Förderdruck (Pr_d) bringt, und wobei das Verfahren die folgenden Schritte umfasst:

   (v-1) Ermitteln eines Ansaugdrucksollwerts (C_Pr_s) ausgehend vom Temperatursollwert (C_T_F1) der Wärmeträgerfluid (F1), ausgehend vom Sollwert für den Durchfluss der Wärmeträgerfluid (F1), ausgehend von einer Temperatur der Wärmeträgerfluid (F1) am Einlass des ersten Wärmetauschers (1) und ausgehend von der Drehzahl des Kompressors (7),
   (v-2) Steuern eines Durchflussquerschnitts des zweiten Expansionsventils (32), damit eine Differenz zwischen dem Ansaugdruck (Pr_s) und dem Ansaugdrucksollwert (C_Pr_s) unter einem zweiten vorgegebenen Schwellenwert liegt.

5. Verfahren nach einem der Ansprüche 1 bis 4, umfassend die folgenden Schritte:

   (vii1) Bestimmen einer Überhitzung (Sh) des Kältemittels am Einlass des Kompressors (7),
   (vii2) Steuern eines Durchflussquerschnitts des ersten Expansionsventils (31) derart, dass die Überhitzung (Sh) einem Sollwert (C_Sh) entspricht.

6. Verfahren nach einem der Ansprüche 1 bis 4, umfassend die folgenden Schritte:

   (vii1') Bestimmen einer Überhitzung (Dsh) des Kältemittels am Ausgang des Kompressors (7),
   (vii2') Steuern eines Durchflussquerschnitts des zweiten Expansionsventils (32) derart, dass die Überhitzung (Dsh) einem Sollwert (C_Dsh) entspricht.

7. Verfahren nach einem der vorstehenden Ansprüche, wobei der Hauptkreislauf (A) des Klimatisierungssystems (100) stromabwärts des ersten Wärmetauschers (1) und stromaufwärts des ersten Entspannungsvorrichtung (31) einen dritten Wärmetauscher (3) umfasst, der gemeinsam am Kältemittelkreislauf (10) und am Wärmeträgerflüssigkeitskreislauf (20) angeordnet ist, wobei der dritte Wärmetauscher (3) so ausgelegt ist, dass er der Wärmeträgerflüssigkeit eine Wärmeleistung (Pw3) zuführt, und wobei in Schritt (i) der Sollwert der zu liefernden Wärmeleistung eine Gesamtwärmeleistung (Pw_tot) ist, die sich aus der der Wärmeträgerfluid (F1) am ersten Wärmetauscher (1) zu liefernden Wärmeleistung (Pw1) und der der Wärmeträgerflüssigkeit am dritten Wärmetauscher (3) zu liefernden Wärmeleistung (Pw3) zusammensetzt.

8. Verfahren nach einem der Ansprüche 1 bis 7, wobei die Wärmeträgerfluid (F1) ein Innenluftstrom (Fi) in einem Fahrgastraum eines Kraftfahrzeugs ist.

9. Verfahren nach einem der Ansprüche 1 bis 7, wobei die Wärmeträgerfluid (F1) eine Wärmeträgerflüssigkeit ist, die so ausgelegt ist, dass sie durch einen fünften Wärmetauscher (5) zirkuliert, der so ausgelegt ist, dass er Wärme mit einem Innenluftstrom (Fi) im Fahrzeuginnenraum austauscht.

10. Verfahren nach einem der vorstehenden Ansprüche, wobei der zweite Wärmetauscher (2) über die Wärmeträgerflüssigkeit des Wärmeträgerflüssigkeitskreislaufs (20) thermisch mit einem Element (25) des Antriebsstrangs des Fahrzeugs gekoppelt ist.

11. Klimatisierungssystem (100), insbesondere für ein Kraftfahrzeug, umfassend:

    - einen Wärmeträgerflüssigkeitskreislauf (20), der so ausgelegt ist, dass er eine Wärmeträgerflüssigkeit zirkulieren lässt,
    - einen Kältemittelkreislauf (10) mit:

      -- einen Hauptkreislauf (A), der in Strömungsrichtung des Kältemittels nacheinander umfasst:

        --- einen Kompressor (7),
        --- einen ersten Wärmetauscher (1), der so ausgelegt ist, dass er einer Wärmeträgerfluid (F1) eine Wärmeleistung (Pw1) zuführt,
        --- ein erstes Expansionsventil (31), einen zweiten Wärmetauscher (2), der gemeinsam am Kältemittelkreislauf

(10) und am Wärmeträgerflüssigkeitskreislauf (20) angeordnet ist, um einen Wärmeaustausch zwischen dem Kältemittel und der Wärmeträgerflüssigkeit zu ermöglichen,

-- einen ersten Bypass-Zweig (B), der es dem aus dem Kompressor (7) austretenden Kältemittel ermöglicht, unter Umgehung des ersten Wärmetauschers (1) und des ersten Expansionsventils (31) zum zweiten Wärmetauscher (2) zu gelangen, wobei der erste Bypass-Zweig (B) ein zweites Expansionsventil (32) umfasst,

- eine elektronische Steuereinheit (50), die so konfiguriert ist, dass sie das Steuerverfahren gemäß einem der vorstehenden Ansprüche ausführt.

**12.** Klimatisierungssystem (100) nach dem vorstehenden Anspruch, wobei der Kältemittelkreislauf (10) einen zweiten Bypass-Zweig (C) umfasst, der parallel zum ersten Expansionsventil (31) und zum dritten Wärmetauscher (3) angeordnet ist, wobei der zweite Bypass-Zweig (C) ein viertes Expansionsventil (34) und einen vierten Wärmetauscher (4) umfasst, und wobei der vierte Wärmetauscher (4) so ausgelegt ist, dass er Wärme mit einem Innenluftstrom (Fi) im Innenraum des Fahrzeugs austauscht.

**13.** Klimatisierungssystem (100) nach Anspruch 11 oder 12, wobei der Hauptkreislauf (A) einen Kältemittelspeicher (8) umfasst, der stromabwärts des ersten Wärmetauschers (1) und stromaufwärts des ersten Expansionsventils (31) angeordnet ist.

**Claims**

**1.** A method for controlling a thermal conditioning system (100), the thermal conditioning system (100) being in particular for a motor vehicle, comprising:

- a heat transfer fluid circuit (20) configured to circulate a heat transfer fluid,
- a refrigerant circuit (10) comprising:

-- a main loop (A) comprising, in sequence according to the direction of refrigerant flow:

--- a compressor (7),
--- a first heat exchanger (1) configured to supply thermal power (Pw1) to a heat transfer fluid (F1),
--- a first expansion valve (31),
--- a second heat exchanger (2) arranged jointly on the refrigerant circuit (10) and on the heat transfer fluid circuit (20) so as to allow heat exchange between the refrigerant and the heat transfer fluid,

-- a first bypass branch (B) allowing the refrigerant fluid exiting the compressor (7) to reach the second heat exchanger (2) by bypassing the first heat exchanger (1) and the first expansion valve (31), the first bypass branch (B) comprising a second expansion valve (32),

the control method comprising the steps:

(i) Receiving a thermal power setpoint (C_Pw) to be supplied at least to the heat transfer fluid (F1),
(ii) If the thermal power setpoint (C_Pw) is less than a predetermined minimum threshold (P_Pw_min):
(iii) Maintaining a rotational speed of the compressor (7) within a predetermined speed range (N1, N2),
(iv) Determining a setpoint (C_T_F1) for the temperature of the heat transfer fluid (F1) at the outlet of the first heat exchanger (1) based on the received thermal power setpoint (C_Pw),
(v) Determining an actual temperature (T_F1_o) of the heat transfer fluid (F1) at the outlet of the first heat exchanger (1),
(vi) Control the flow area of the second expansion valve (32) so that a difference (D) between the determined setpoint temperature (C_T_F1) of the heat transfer fluid (F1) and the determined actual temperature (T_F1_o) of the heat transfer fluid (F1) is less than a first predetermined threshold, and
(vii) Controlling a flow section of the first expansion valve (31) so that the refrigerant entering the compressor (7) is in a superheated vapor state.

**2.** A method according to claim 1, wherein, in step (iii), the rotational speed of the compressor (7) is controlled to a predetermined constant value.

**3.** A method according to claim 1 or 2, wherein step (vi) comprises the substep:

(vi-1) If the difference between the determined temperature setpoint (C_T_F1) of the heat transfer fluid (F1) and the determined actual temperature of the heat transfer fluid (F1) is greater than 0, reduce the flow cross-sectional area of the second expansion valve (32),
(vi-2) If the calculated deviation is less than 0, increase the flow cross-sectional area of the second expansion valve (32).

**4.** A method according to one of the preceding claims in combination with claim 2, wherein the compressor (7) is configured to cause the refrigerant to pass from a suction pressure (Pr_s) to a discharge pressure (Pr_d), and wherein the method comprises the steps:

(v-1) Determining a suction pressure setpoint (C_Pr_s) based on the temperature setpoint (C_T_F1) of the heat transfer fluid (F1), based on the heat transfer fluid (F1) flow rate setpoint, based on a temperature of the heat transfer fluid (F1) at the inlet of the first heat exchanger (1), and based on the rotational speed of the compressor (7) regulated to a predetermined constant value,

(v-2) Controlling a flow cross-section of the second expansion valve (32) so that a difference between the suction pressure (Pr_s) and the suction pressure setpoint (C_Pr_s) is less than a second predetermined threshold.

**5.** A method according to any one of claims 1 to 4, comprising the steps of:

(vii1) Determining a superheat (Sh) of the refrigerant at the inlet of the compressor (7),

(vii2) Controlling a flow cross-section of the first expansion valve (31) so that the superheat (Sh) of the refrigerant at the inlet of the compressor (7) is equal to a setpoint value (C_Sh).

**6.** A method according to any one of claims 1 to 4, comprising the steps of:

(vii1') Determining a superheat (Dsh) of the refrigerant at the outlet of the compressor (7),

(vii2') Controlling a flow cross-section of the second expansion valve (32) such that the superheat of the refrigerant at the outlet of the compressor (7) is equal to a setpoint value (C_Dsh).

**7.** A method according to one of the preceding claims, wherein the main loop (A) of the thermal conditioning system (100) comprises, downstream of the first heat exchanger (1) and upstream of the first expansion device (31), a third heat exchanger (3) arranged in common on the refrigerant circuit (10) and on the heat transfer fluid circuit (20) so as to allow heat exchange between the refrigerant and the heat transfer fluid, the third heat exchanger (3) being configured to supply thermal power (Pw3) to the heat transfer fluid, and wherein in step (i), the setpoint for the thermal power (Pw) to be supplied is a total thermal power (Pw_tot), which is the sum of the thermal power (Pw1) to be supplied to the heat transfer fluid (F1) at the first heat exchanger (1) and the thermal power (Pw3) to be supplied to the heat transfer liquid at the third heat exchanger (3).

**8.** A method according to any one of claims 1 to 7, wherein the heat transfer fluid (F1) is a flow of interior air (Fi) in the passenger compartment of a motor vehicle.

**9.** A method according to any one of claims 1 to 7, wherein the heat transfer fluid (F1) is a heat transfer liquid configured to circulate in a fifth heat exchanger (5) configured to exchange heat with an interior air flow (Fi) in the vehicle passenger compartment.

**10.** A method according to any one of the preceding claims, wherein the second heat exchanger (2) is thermally coupled to an element (25) of the vehicle powertrain via the heat transfer fluid of the heat transfer fluid circuit (20).

**11.** Thermal conditioning system (100), in particular for a motor vehicle, comprising:

- a heat transfer fluid circuit (20) configured to circulate a heat transfer fluid,
- a refrigerant circuit (10) comprising:

-- a main loop (A) comprising, in sequence according to the direction of refrigerant flow:

--- a compressor (7),
--- a first heat exchanger (1) configured to supply thermal power (Pw1) to a heat transfer fluid (F1),
--- a first expansion valve (31),
--- a second heat exchanger (2) arranged jointly on the refrigerant circuit (10) and on the heat transfer fluid circuit (20) so as to allow heat exchange between the refrigerant and the heat transfer fluid,

-- a first bypass branch (B) allowing the refrigerant fluid exiting the compressor (7) to reach the second heat exchanger (2) by bypassing the first heat exchanger (1) and the first expansion valve (31), the first bypass branch (B) comprising a second expansion valve (32),

- An electronic control unit (50) configured to implement the control method according to one of the preceding claims.

**12.** A thermal conditioning system (100) according to the preceding claim, wherein the refrigerant circuit (10) comprises a second bypass branch (C) arranged in parallel with the first expansion valve (31) and the third heat exchanger (3), the second bypass branch (C) comprising a fourth expansion valve (34) and a fourth heat exchanger (4),
and wherein the fourth heat exchanger (4) is configured to exchange heat with an air flow (Fi) inside the vehicle cabin.

13. A thermal conditioning system (100) according to claim 11 or 12, wherein the main refrigerant loop (A) comprises a refrigerant accumulator (8) disposed downstream of the first heat exchanger (1) and upstream of the first expansion valve (31).

FIG. 1

FIG. 2

FIG. 3

EP 4 547 505 B1

FIG. 4

FIG. 5

FIG. 6

EP 4 547 505 B1

FIG. 7

## EP 4 547 505 B1